# EUROPEAN PATENT SPECIFICATION

(11) **EP 0 699 926 B1**
(45) Date of publication and mention of the grant of the patent: **04.12.2002**
(21) Application number: 95912426.4
(22) Date of filing: 16.03.1995
(51) Int. Cl.: G02B 1/10

(54) **PLASTIC LENS WITH PRIMER LAYER**
KUNSTSTOFFLINSE MIT HAFTSCHICHT
LENTILLE EN MATIERE PLASTIQUE AVC UNE COUCHE DE BASE

(30) Priority: 18.03.1994 JP 4817794; 18.03.1994 JP 4817894; 06.01.1995 JP 90395; 10.01.1995 JP 228895; 28.02.1995 JP 4000495
(43) Date of publication of application: 06.03.1996
(73) Proprietor: NIKON CORPORATION, Tokyo 100-0005 (JP)
(72) Inventor: SHIONO, Hirofumi, Shizuoka 435 (JP); ABE, Osamu Hodogaya Gurintaun D-202, Kanagawa 240 (JP); SEKI, Michiko, Kanagawa 210 (JP); MIURA, Yoshihiro Nikon Shataku A308, Tokyo 158 (JP); SHIMIZU, Sumito Kurio Kamihoshikawa Ichibankan, Kanagawa 240 (JP)
(74) Representative: Burke, Steven David
(86) International application number: JP9500442
(87) International publication number: WO95025968

(56) References cited:
- EP-A- 0 051 405
- EP-A- 0 404 111
- WO-A-93/00391
- JP-A- 1 105 909
- JP-A- 3 109 502
- JP-A- 61 286 803
- JP-A- 62 268 639
- US-A- 3 484 157
- US-A- 3 652 379
- US-A- 4 164 602
- US-A- 4 172 187
- US-A- 4 243 719
- US-A- 4 383 057

## Description

The present invention relates to a plastic lens having excellent impact resistance as well as mar-proof and anti-reflection characteristic, water and weathering resistance, chemical resistance, adhesive property with respect to a hardened coating layer and satisfying U.S. FDA standards.

Plastics lenses have various advantages of light weight, excellent impact resistance, satisfactory workability and dye-affinity, and therefore have been rapidly and widely used in the field of optical materials, in particular, in the field of lenses for eyeglasses. However, plastics lenses generally suffer from a problem in that they can easily be damaged. Therefore, the surfaces of plastics lenses have been usually provided with silicon hardened films for the purpose of hardening the surfaces. To prevent reflection from the surface of the lens that causes a flicker of an image, an anti-reflection film having inorganic substances evaporated thereto has been provided so that an excellent additive value is given to the plastics lens.

However, a plastics lens of a type comprising both hard coating layer and an anti-reflection film has a problem in that its impact resistance deteriorates excessively as compared with a plastic lens having no film and a plastic lens of a type having only the hard coating layer. Although a convex lens having a sufficiently thick central portion is able to satisfy U.S. FDA standards, a concave lens having a thin central portion cannot sometimes satisfy FDA standards. In particular, the thickness of the central portion of a concave lens is in a trend of being reduced to improve the external appearance, thus resulting in a problem to arise in that satisfactory impact resistance cannot be attained.

A plurality of means have been suggested with which a plastics lens subjected to surface treatment, such as hard coating and anti-reflection coating, is enabled to pass the impact resistance test per U.S. FDA standards. One of the means is to improve the impact resistance by thickening the central portion of the concave lens. However, the foregoing means results in thickening the end portions of the lens, thus raising a problem in that the external appearance deteriorates and another problem in the viewpoint of practical use such that the weight of the lens is enlarged undesirably. Depending upon the material of the plastics lens, some lenses, the central portion of which has been simply thickened, cannot satisfy the impact resistance test per FDA standard.

A multiplicity of materials for plastics lenses have been disclosed that exhibit excellent impact resistance so that it is able to satisfy U.S. FDA standards, even if the impact resistance has deteriorated due to provisions of the hard coating layer and the anti-reflection film. A multiplicity of novel materials for plastics lenses have been disclosed in recent years that exhibit excellent impact resistance to satisfy the impact resistance test per U.S. FDA standards. For example, refer to Japanese Patent Application Laid-Open No. 61-170701, Japanese Patent Application Laid-Open No. 1-244401, Japanese Patent Application Laid-Open No. 2-36216, Japanese Patent Application Laid-Open No. 4-159309, Japanese Patent Application Laid-Open No. 4-161412, Japanese Patent Application Laid-Open No. 4-126710, Japanese Patent Application Laid-Open No. 5-5011, Japanese Patent Application Laid-Open No. 4-142315, Japanese Patent Application Laid-Open No. 4-161410, Japanese Patent Application Laid-Open No. 4-161411, Japanese Patent Application Laid-Open No. 4-202308, and Japanese Patent Application Laid-Open No. 4-202309. However, all of the foregoing disclosures are able to satisfy the FDA standards in their states from which the hard coating layer and the anti-reflection are omitted. As for the minimum thickness of the central portion of the lens, each of the lenses is too thick such that their thickness ranges from 1.5 mm to 2 mm. Thus, a material for plastic lenses that exhibits satisfactory impact resistance in the viewpoint of practical use has not been suggested.

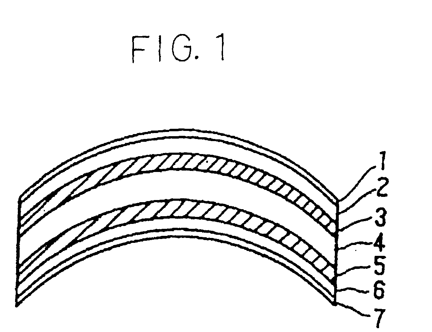

Another method for improving the impact resistance is to form a primer layer made of a resin composition between the base of the plastics lens and the hard coating layer. Figure 1 shows an example of a plastics lens of a type comprising primer layers 3 and 5 formed between hard coating layers 2 and 6; and anti-reflection films 1 and 7 formed on the hard coating layers 2 and 6.

The primer layer has been originally suggested to serve as a means for improving adhesive properties between the base of the plastics lens and the hard coating layer, and has been mainly directed to improve the adhesive properties similarly to the surface modification means, such as the saponification and plasma irradiation etching. Prior art about the primer layer for achieving the foregoing object have been disclosed, for example, a method (refer to Japanese Patent Application Laid-Open No. 60-214301) using an epoxy compound, a method (refer to Japanese Patent Application Laid-Open No. 60-214302) using, as the main component thereof, acrylic and/or methacrylic compound and an aromatic vinyl compound, and a method (refer to Japanese Patent Application Laid-Open No. 61-114203) using a primer composition consisting of acrylpolyol and a polyfunctional organic isocyanate compound. Although all of the foregoing methods are able to achieve the foregoing object of improving the adhesive properties while attaining chemical resistance, the impact resistance has not been improved.

A method has been suggested recently which uses polyurethane resin to form a primer layer for improving the impact resistance. For example, refer to Japanese Patent Application Laid-Open No. 63-14001, Japanese Patent Application Laid-Open No. 63-87223, Japanese Patent Application Laid-Open No. 3-10950, Japanese Patent Application Laid-Open No. 4-366801, and Japanese Patent Application Laid-Open No. 5-25299. Methods respectively disclosed in Japanese Patent Application Laid-Open No. 63-14001 and Japanese Patent Application Laid-Open No. 63-87223 comprise the steps of applying polyurethane resin solution to a plastics lens; and volatilizing a solvent to obtain a polyurethane resin layer, the obtained polyurethane being so-called thermoplastic resin having no crosslinked structure. If the plastic lens having the foregoing polyurethane layer is immersed in hard coating liquid for the purpose of forming a hard coating layer, polyurethane in the primer layer is dissolved in the solvent in the hard coating liquid and is eluted into the hard coating liquid, thus resulting in that the hard coating liquid to be frequently contaminated. Furthermore, the primer layer is corroded due to the solvent, whereby the transparency of the primer layer is lost and the primer layer is frequently made cloudy. In Japanese Patent Application Laid-Open No. 61-114203, a method of forming a polyurethane layer having a hardened crosslinked structure has been disclosed that comprises the step of applying a primer composition consisting of acrylpolyol and a polyfunctional organic isocyanate compound. However, since the foregoing method uses the isocyanate compound that is capable of reacting with active hydrogen at room temperature, reactions between hydroxyl groups in the polyol and isocyanate groups proceed during storage of the primer coating liquid. As a result, the foregoing method suffers from a problem in that the pot life for the primer coating liquid cannot be lengthened satisfactorily.

As for a polyurethane primer layer directed to improve the pot life of the primer coating liquid, a method of control has been disclosed in Japanese Patent Application Laid-Open No. 3-109502, Japanese Patent Application Laid-Open No. 4-366801 and Japanese Patent Application Laid-Open No. 5-25299. In the foregoing disclosures, when primers of thermosetting polyurethane resin having a crosslinked structure are formed by using polyfunctional organic isocyanate compounds and polyol compounds, block materials, that are desorbed when heated, are combined with the isocyanate groups in the polyfunctional organic isocyanate so as to prevent proceeding of the reactions between active hydrogen in the polyol and the isocyanate groups of the organic isocyanate compounds in a case where the plastics lens is stored at room temperature or lower. However, desorption of the block materials requires heat higher than 120°C. The foregoing high-temperature process raises a critical problem for the plastics lens that has insufficient heat resistance. The plastics lens has, as one of characteristics thereof, dye-affinity with which the plastic lens can easily be colored into an arbitrary color tone. If a plastics lens, the base of which has been dyed with an organic dye in a most usual method, is applied with primer resin liquid mainly containing block-type polyfunctional organic isocyanate compounds and polyol compounds and as well as the plastic lens is heated to a level higher than 120°C, the dye is desorbed,.thus causing critical problems in the viewpoint of maintaining the external appearance and workability.

Since plastic lenses are used in a variety of environments in such a manner that, for example, eyeglasses are sometimes left in an automobile exposed to the burning sun, the plastics lens must have a heat resistance of about 100°C in consideration of the environment for use. Thus, there arises a desire for improving the plastic lens applied with the primer layer.

To obtain thinner and lighter plastics lenses, the plastics lenses must be formed into an aspheric surface, or a plastics material having a higher refractive index must be used. To satisfactorily thin the plastics lens and to reduce the weight of the same, it is effective to use a plastics material of a type having a high refractive index. In the foregoing case, generation of interference fringes must be prevented by making the refractive index of the primer layer and that of the hard coating layer to be substantially the same as that of the material for the plasticslens that has the high refractive index.

Another significant prior art disclosure is that of U.S. Patent No. 4,383,057. That document describes a coating composition having an improved scratch resistance. That composition comprises an organic solvent solution of polyvinyl butyral and an alcoholic dispersion of substantially spherical colloidal silica.

The present invention seeks to provide a hard-coated plastics lens suitable for eye glasses which has an improved impact resistance, as well as other beneficial properties, and achieves this by coating the lens with a primer composition containing a polyvinyl acetal and a hydrolyzable organosilane crosslinking agent having 2 or 3 hydrolyzable groups. It has been found that the use of such crosslinking agents provides the improved impact resistance that is sought.

In accordance with the invention, there is now provided a hard-coated plastics lens for eyeglasses having improved impact resistance, comprising:
a plastics lens;
a primer layer formed on at least one surface of the lens by coating on that surface a primer composition, and crosslinking and drying the composition, the primer composition comprising:
   (A) from 1 to 30% by weight of a polyvinyl acetal of the general formula (I): 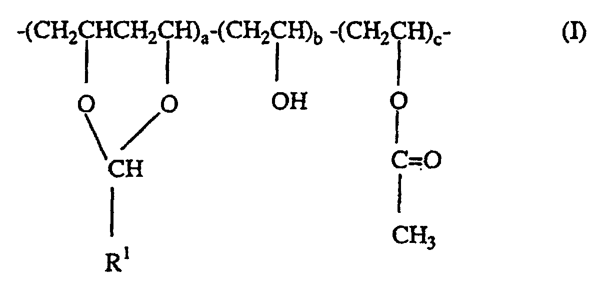 in which R¹ is a hydrogen atom or a saturated hydrocarbon group having 1 to 20 carbon atoms, a is the percentage fraction of structural units having an acetal group and is 10 to 90, b is the percentage fraction of structural units having an OH group and is 10 to 90, c is the percentage fraction of structural units having an acetyl group and is 0 to 10, and a + b + c = 100;
   (B) from 0.01 to 30% by weight of at least one crosslinking agent selected from:
      hydrolyzable organosilanes, and their hydrolysis products, of the general formula (II):

         R² _{d}R³ ₑ-Si-X¹ _{4-(d+e)} (II)

         in which each of R² and R³ is a substituted or a non-substituted hydrocarbon group having 1 to 8 carbon atoms, X¹ is a hydrolyzable group, and each of d and e is 0, 1 or 2 and d + e = 1 or 2; and
      hydrolyzable organosilanes, and their hydrolysis products, of the general formula (III):

         X² _{(3-f)}R⁵ _{f}-Si-R⁴-Si-R⁶ _{g}X² _{(3-g)} (III)

         in which R⁴ is an organic group having 2 to 8 carbon atoms, each of R⁵ and R⁶ is a substituted or a non-substituted hydrocarbon group having 1 to 8 carbon atoms, X² is a hydrolyzable group, and each of f and g is 0, 1 or 2;
   (C) from 10 to 80% by weight of a particulate inorganic substance having an average particle size of 1 to 300 nm and selected from aluminum oxide, iron oxide, cerium dioxide, tungsten oxide, molybdenum oxide, titanium oxide, zirconium oxide, tin oxide, antimony oxide, zinc oxide and beryllium oxide; and
   (D) an organic solvent and water; and
      a hard coating layer formed on the primer layer.

The plastics lens preferably further comprises a single- or multi-layer anti-reflection film formed on the hard coating layer and made of an inorganic substance. A plasticizing agent may be allowed to coexist with the primer layer.

It is preferred that the primer composition contains a catalytic hardener by 0.002 wt% to 20 wt%. Furthermore, it is preferred that the polyvinyl acetal be polyvinylbutyral.

The present invention will now be described further in detail.

The material that can be employed to form the base of the plastics lens is processed such that a catalyst and, as the need arises, known additives, such as an ultraviolet absorber and a light stabilizer, are added to a liquid-and-hardening compound, followed by being injected into a die; and polymerization is caused to take place by heating or irradiating with ultraviolet rays, so that the material is formed into the desired shape of the plastics lens. As the liquid-and-hardening compound, a variety of compounds, that include those which have been used to manufacture plastic lenses, may be employed. In particular, it is effective if a liquid-and-hardening compound is employed that has a structure such that its main chains and/or side chains have one or more kinds of a benzene ring, a naphthalene ring, a carbonate bond, an ester bond and an urethane bond.

The compound having the foregoing functional group is exemplified by diethyleneglycol bisallylcarbonate, styrene, α-methylstyrene, chlorostyrene, phenyl (meth) acrylate, benzyl (meth) acrylate, vinylnaphthalene, naphthyl (meth) acrylate, (di)(meth) acrylate of tetrabromobisphenol A derivative, divinyl benzene, diallyl carbonate of tetrabromobisphenol A derivative, methylmethaacrylate, (di) ethyleneglycol di(meth) acrylate; reactants between hydroxy (meth) acrylate, such as 2-hydroxyethyl (meth) acrylate, 3-hydroxypropyl (meth) acrylate and 2,3-hydroxypropyl (meth) acrylate, and polyfunctional (poly) isocyanate, such as xylylene diisocyanate, isophorone diisocyanate, hexamethylene diisocyanate or cyclic trimer of hexamethylene diisocyanate; reactants between a thiol compound, such as di (2-mercaptoethyl) ether, 1,2-ethanedithiol, di (2-mercaptoethyl) sulfide, 2-mercaptoethanol, pentaerythritol tetrakis-3-mercarptopropionate, 4-mercaptomethyl-3,6-dithia-1,8-octanediol, and polyfunctional (poly) isocyanate; and their mixtures.

Polyvinyl acetal, which is the main component of the primer composition and which is expressed by general formula (I) is of a type having 1 to 20 carbon atoms in the alkyl group of the acetal portion thereof, preferably 1 to 10 carbon atoms. The carbon chains in the saturated hydrocarbon portions are not required to be in the form of a straight chain structure but they may be branched. In particular, the most preferred material is polyvinyl butyral comprising an alkyl group having 3 carbon atoms. The degree of acetalization of polyvinyl acetal must be 10 % to 90 %, and it is preferred that polyvinyl acetal having a degree of acetalization of 20 % to 80 % be employed. If the degree of acetalization of polyvinyl acetal is less than 10 %, the weathering resistance deteriorates, and thus the improvement in the impact resistance is unsatisfactory. Polyvinyl acetal of a type having a degree of acetalization of 90 % or higher cannot easily be synthesized. Even if it can be synthesized, deterioration in the adhesive properties with respect to the plastic base is expected.

It is preferred that the degree of polymerization of polyvinyl acetal be 5,000 or less, more preferably 100 to 3,000. If the average degree of polymerization of polyvinyl acetal is larger than 5,000, it cannot easily be dissolved in the solvent and polyvinyl acetal having the optimum degree of acetalization cannot easily be synthesized. If the average degree of polymerization of polyvinyl acetal is smaller than 100, then the impact resistance cannot be improved satisfactorily. Note that the acetyl group in polyvinyl acetal expressed by formula (I) is not the essential component for the present invention, but it is left in a small quantity because polyvinyl alcohol, which is the raw material for polyvinyl acetal, is synthesized due to hydrolysis of polyvinyl acetate.

The content of polyvinyl acetal in the primer composition is 1 wt% to 30 wt%, preferably 2 wt% to 20 wt%. If the content of polyvinyl acetal is larger than 30 wt%, the viscosity of the polyvinyl acetal resin solution is raised excessively, thus raising a difficulty in applying the solution to the plastic lens. As a result, the applied primer layer is thickened excessively or uniformity of the applied surface cannot be realized. If the content of polyvinyl acetal is smaller than 1 wt%, the applied primer layer is too thin to attain satisfactory impact resistance.

The organosilane compound expressed in formula (II) or (III) is used as a crosslinking agent. The hydrolyzable groups in the organosilane compound are hydrolyzed so that silanol groups are prepared, followed by being dehydration-condensed with the hydroxyl groups in polyvinyl acetal due to the effect of the catalyst and heat so that crosslinking takes place among or in molecules. Molecules, which are crosslinked, are product of the hydrolysis or condensation of the organosilane compound. The organosilane compound may be added as it is, or may be hydrolyzed before the addition. A single type organosilane compound may be used or two or more types of organosilane compounds in the form of a mixture may be used. As the organosilane compound, it is preferred to employ halosilane compounds, hydrolyzable groups of which are halogen atoms; alkoxysilane compounds, hydrolyzable groups of which are alkoxy groups; carboxysilane compounds, hydrolyzable groups of which are carboxy groups; or ketooximesilane compounds, hydrolyzable groups of which are ketooxime groups, more preferably alkoxysilane compounds.

The hydrolyzable organosilane compound expressed by general formula (II) is exemplified by dimethyl dimethoxysilane, dimethyl diethoxysilane, diethyl dimethoxysilane, diethyl diethoxysilane, phenylmethyl dimethoxysilane, phenylmethyl diethoxysilane, γ-chloropropylmethyl dimethoxysilane, γ-chloropropylmethyl diethoxysilane, γ-methacryloxypropylmethyl dimethoxysilane, γ-methacryloxypropylmethyl diethoxysilane, γ-mercaptopropylmethyl dimethoxysilane, γ-mercaptopropylmethyl diethoxysilane, γ-aminopropylmethyl dimethoxysilane, γ-aminopropylmethyl diethoxysilane, methylvinyl dimethoxysilane, methylvinyl diethoxysilane, γ-glycidoxypropylmethyl dimethoxysilane, γ-glycidoxypropylmethyl diethoxysilane, methyltrimethoxysilane, methyltriethoxysilane, methyltripropoxysilane, methyltributoxysilane, methyltris (2-methoxyethoxy) silane, ethyltrimethoxysilane, ethyltriethoxysilane, ethyltripropoxysilane, ethyltributoxysilane, ethyltris (2-methoxyethoxy) silane, propyltrimethoxysilane, propyltriethoxysilane, butyltrimethoxysilane, butyltriethoxysilane, hexyltrimethoxysilane, hexyltriethoxysilane, vinyltrimethoxysilane, vinyltriethoxysilane, vinyltris (2-methoxyethoxy) silane, phenyltrimethoxysilane, phenyltriethoxysilane, γ-chloropropyl trimethoxysilane, γ-chloropropyl triethoxysilane, 3,3,3-trifluoropropyl trimethoxysilane, 3,3,3-trifluoropropyl triethoxysilane, γ-methacryloxypropyl trimethoxysilane, γ-methacryloxypropyl triethoxysilane, γ-aminopropyl trimethoxysilane, γ-aminopropyl trimethoxysilane, γ-mercaptopropyl trimethoxysilane, γ-mercarptopropyl triethoxysilane, chloromethyl trimethoxysilane, chloromethyl triethoxysilane, N-(β-aminoethyl)-γ-aminopropyl trimethoxysilane, N-(β-aminoethyl)-γ-aminopropyl triethoxysilane, γ-glycidoxypropyl trimethoxysilane, γ-glycidoxypropyl triethoxysilane, (3,4-epoxycyclohexylmethyl) trimethoxysilane, (3,4-epoxycyclohexylmethyl) triethoxysilane, β-(3,4-epoxycyclohexylethyl) trimethoxysilane, β-(3,4-epoxycyclohexylethyl) triethoxysilane, tetramethoxysilane, tetraethoxysilane, tetrapropoxysilane and tetrabutoxysilane.

The hydrolyzable organosilane compound expressed by general formula (III) is exemplified by 1,1-bis (trimethoxysilyl) ethane, 1,1-bis (triethoxysilyl) ethane, 1,2-bis (trimethoxysilyl) ethane, 1,2-bis (triethoxysilyl) ethane, 1,3-bis (trimethoxysilyl) propane, 1,3-bis (triethoxysilyl) propane, 2,2-bis (trimethoxysilyl) propane, and 2,2-bis (triethoxysilyl) propane. The quantity of the organosilane compound in the primer composition is 0.01 wt% to 30 wt%, preferably 0.1 wt% to 20 wt%.

The catalytic hardener is not limited particularly if it promotes the dehydration-condensing reactions between the silanol groups produced due to the hydrolysis and hydroxyl groups in polyvinyl acetal.

In any of the foregoing crosslinking agent systems, acidic catalyst is effective, that is exemplified by an inorganic acid, such as hydrochloric acid, nitric acid, sulfuric acid or phosphoric acid, organic acid, such as formic acid, acetic acid, benzoic acid, phthalic acid, methanesulfonic acid, benzenesulfonic acid or alkylbenzenesulfonic acid having an alkyl group that has 1 to 18 carbon atoms, or organic tin compound, such as dibutyl tin laurate, dibutyl tin octate or dibutyl tin acetate. A preferred acidic catalyst is inorganic acid, such as hydrochloric acid or nitric acid, organic acid, such as methanesulfonic acid, benzenesulfonic acid or p-toluene sulfonic acid, and organic tin compound. The foregoing catalysts may be used solely or two or more types of the catalysts may be used. It is preferred that the quantity of addition of the catalytic hardener in the primer composition be 0.002 wt% to 10 wt%, more preferably 0.005 wt% to 5 wt%.

Furthermore, it is effective to use metal complex catalyst having acetylacetone or ethylenediamine as the ligand thereof, metal perchlorate or solid catalyst. Any of solid catalyst, exemplified by metal, metal compounds, metal sulfide, sulfate and carbonate, may be employed if the selected catalyst has the foregoing performance as the catalyst. The foregoing catalysts may be used solely or two or more types of catalysts may be combined at the time of use. The catalyst may be mixed with the acid catalyst. It is preferred that the quantity of addition of the metal catalyst in the primer composition be 0.001 wt% to 10 wt%, more preferably 0.005 wt% to 5 wt%.

The organic solvent in the primer composition is.. exemplified by carbon hydrides, halogenated hydrocarbon, alcohols, ketones, esters and ethers. Furthermore, other known solvents that are capable of satisfactorily dissolving polyvinyl acetal may be employed as preferred solvents. In particular, it is preferred to employ methanol, ethanol, propanol, butanol, hexanol, methylcellosolve, ethylcellosolve, propylcellosolve, butylcellosolve, acetone, methylethylketone, methylisobutylketone, diethylketone, tetrahydrofuran, dioxane, acetic acid, methyl acetate or ethyl acetate. The foregoing solvents may be used alone or two or more types of solvents may be used as a mixed solvent.

The content of water in the primer composition is 0.1 wt% to 20 wt% that is required to hydrolyze the organosilane compound.

The particulate inorganic substance is embodied by metal oxide particles of zinc oxide, aluminum oxide, titanium oxide, zirconium oxide, tin oxide, antimony oxide, beryllium oxide and tungsten oxide. They may be used solely or composite particles consisting of two or more types of metal oxide particles may be used. In the case where the primer composition, in which the foregoing particulate inorganic substances are dispersed and contained, is formed as the primer layer on the surfaces of the base of the plastics lens, excellent transparency and hardness of the surfaces can be obtained.

In particular, aluminum oxide, titanium oxide, zirconium oxide and antimony oxide have an advantage in causing the primer layer to have a high refractive index.

In a case where the particulate inorganic substances are dispersed and contained in the surfaces of the base of the high refractive plastics lens so as to form the primer layer having the adjusted refractive index, generation of interference fringes can be prevented.

The most preferred method of dispersing the particulate inorganic substances is a method comprising the steps of mixing dispersing elements (the particulate inorganic substances) and vehicle components (substances serving as the substrate that comprises, in this case, polyvinyl acetal, the crosslinking agent and the acidic catalyst); and evaporating the volatile dispersing medium. In performing the foregoing method, an important fact is to pay attention to the compatibility between the dispersing element and the vehicle component. Since the particulate inorganic substances are usually sensitive with respect to acid, alkali and surface active agents, there arise a problem in that the particulate inorganic substances are coagulated and the mixture solution of the dispersing element and the vehicle component is undesirably thickened if no compatibility is attained in the environment around the particulate inorganic substances. The coagulation and thickening take place depending upon the method of mixing the dispersing element and the vehicle component with each other. If they are not stirred sufficiently, the dispersing element cannot be dispersed uniformly in the solution and, thus, a phenomenon of partial coagulation or thickening easily takes place. It is preferred that a rotor and a magnetic stirrer be used in such a manner that the dispersing element is added gradually.

When the primer composition is prepared, the particulate inorganic substances exhibited excellent dispersion characteristic without problems of the coagulation and thickening.

Although the particulate inorganic substances may be those in the form of fine powder, commercial particulate inorganic substance sol dispersed in water or organic solvent is employed. The average size of the particles is 1 nm to 300 nm, preferably 1 nm to 50 nm. If the particle size is less than 1 nm, improvement in the refractive index of the primer layer cannot be expected. If it is larger than 300 nm, the primer layer causes irregular reflection to take place and, therefore, scattered light is intensified excessively so that cloudiness phenomenon takes place.

The quantity of the particulate inorganic substances contained in the primer composition and composed of the metal oxide is 5 wt% to 200 wt% with respect to the quantity of the solid content of the polyvinyl acetal resin. The foregoing quantity is determined in consideration of the thermal expansion coefficient and the refractive index of the plastics base and of the hard coating layer. It is preferable that the quantity be adjusted to make the thermal expansion coefficient of the hardened primer layer to be a substantially intermediate value between that of the base of the plastics lens and that of the hard coating layer and to make the refractive index to be the same as that of the foregoing base and the hard coating layer.

The volatile dispersing medium is exemplified by hydrocarbons, halogenated hydrocarbons, alcohols, ketones, esters, ethers and other known solvents. They may be used alone or mixture of two or more of the foregoing solvents may be used. When the primer composition is prepared, the organic solvent is used to dissolve polyvinyl acetal. Therefore, it is preferred that the solvent for the polyvinyl acetal resin be the same as the dispersing medium for the particulate inorganic substances or at least one of the materials contained in the solvent for dissolving the resin.

The primer composition may be used together with any of a variety of leveling agents for improving coating properties, ultraviolet absorbers or oxidation inhibitors for improving weathering resistance, dyes, pigments, photochromic dyes, photochromic pigments and other known additives for improving performance and adding functions.

When a plasticizing agent is caused to coexist with the polyvinyl acetal resin by 0 wt% to 60 wt%, the primer layer is able to further improve the impact resistance of the plastics lens. The plasticizing agent may be a plasticizing agent for generally use with the polyvinyl acetal resin. For example, the plasticizing agent may be selected from fatty acid diester of ethylene glycol, fatty acid diester of diethylene glycol, fatty acid diester of triethylene glycol, fatty acid diester of tetraethylene glycol, fatty acid diester of aliphatic dicarboxylic acid, aliphatic ester of phosphoric acid and aliphatic ester of phthalic acid.

The method of applying the primer composition onto the plastics lens is not limited particularly if it is a known method, such as a spin coating method, a dipping method or the like. It is preferable that the surfaces of the base of the plastics lens be subjected to previous processes, such as processes respectively using alkali, plasma and ultraviolet light.

The material and the method of molding the plastic lens are not limited particularly.

To harden the primer coating film applied to the surfaces of the plastics lens, it must be heated to 50°C to 120°C, preferably 70°C to 110°C, for 1 to 60 minutes. The heating process causes dehydration-condensation to take place between the hydrolyzed organosilane compound in the applied primer composition and hydroxyl group contained in the polyvinyl acetal so that polyvinyl acetal molecules are crosslinked. Furthermore, water prepared due to the condensation reactions and the organic solvent and water previously contained in the polyvinyl acetal resin solution are evaporated. Thus, the primer layers of polyvinyl acetal three-dimensionally crosslinked are formed on the surfaces of the plastics lens.

The primer layer must have a thickness of 0.05 µm to 5 µm. If it is thinner than 0.05 µm, the impact resistance deteriorates excessively. If it is thicker than 5 µm, the profile irregularity deteriorates.

To improve adhesive properties between the base of the plastics lens and the primer layer when the primer layer is formed, the base of the plastics lens is subjected to surface treatment. The surface treatment is generally performed by a "saponification process" or a "plasma process". The saponification process comprises the steps of: immersing a plastics lens, from which coarse dust has been removed, into about 10 wt% water solution of sodium hydroxide for about 5 minutes at about 60°C; previously washing the plastic lens; and washing the same in a washing process using a surface active agent, pure water and the like.

On the other hand, the plasma process is a method comprising the steps of: locating the surfaces of the base of the plastics lens to be in contact with oxygen plasma; and causing the surfaces of the plastic lens to react with oxygen ions or oxygen radicals in the plasma so as to modify the surfaces.

A method individual from the surface treatment method may be employed, in which films of substances having an effect of improving the adhesive properties are formed on the surfaces of the base of the plastics lens, the substances being a silane coupler or a titanium coupler.

The plastics lens having the primer layer formed as described above may have a hard coating layer by a known method in order to harden the surfaces thereof. The hard coating layer film can be formed by a wet method in which the lens is, by dipping or spin-coating, applied with hard coating liquid, in which hydrolyzed organoalkoxysilane, metal oxide particles and metal complex catalyst are dissolved, and the hard coating liquid is heated so as to be hardened; or a dry method in which plasma CVD is performed.

The organoalkoxysilane in the hard coating layer formed by the wet method is exemplified by γ-glycidoxypropyl trimethoxysilane, γ-glycidoxypropyl triethoxysilane, γ-glycidoxypropylmethyl diethoxysilane, methyltrimethoxysilane, methyltriethoxysilane and 1,2-bis (trimethoxysilyl) ethane. The hydrolyzed alkoxysilane is prepared by dissolving at least a organoalkoxysilane in acidic solution, such as hydrochloric acid, to take place hydrolytic reactions.

Since the dry method is able to form hard films as compared with the films formed by the wet method, excellent mar-proof characteristic is attained. Furthermore, the risk of corrosion of undercoat substance, from which the wet method suffers, does not arise. Thus, a multilayer structure together with more various substances can be formed. The foregoing film forming method is a technique that has been rapidly developed as the advancement in the technique for manufacturing semiconductors and its application to other industrial fields has been energetically developed in recent years. The dry method employs evaporating, sputtering, chemical vapor deposition (as well as called a "CVD method") or the like. In particular, a low-temperature plasma CVD method is considered to be the most preferred. As the raw material gas, silane gas (monosilane, dichlorosilane or the like) and hydrogen gas, nitrogen gas or ammonium gas are mixed in a sample chamber at a predetermined flow rate ratio so that an SiOx film or an SiNx film is formed. The temperature, at which the gas reactions form the film, is set to about 80°C to 100°C in consideration of the influence on the plastics substrate. As described previously, the hard coating layer formed by the low temperature plasma CVD method has a significant characteristic that it is harder and denser than the organic hard coating layer. Therefore, the residual stress of the CVD film is considerably large and linear thermal expansion coefficient is smaller than that of the plastics base or the primer layer by one digit. The residual stress of the film and the thermal stress (the linear thermal expansion coefficient) considerably depend upon the structure of the film. Since the film forming condition considerably affects the structure of the film, setting of the film forming condition is an important factor. The reason for this is that the residual stress of the film, the thermal stress and the like of the hard coating layer considerably affect the heat resistance and impact resistance of the plastics lens.

As the metal oxide particles, commercial metal oxide particle sol dispersed in water or an organic solvent is employed. The metal oxide particle sol is exemplified by zinc oxide sol, silicon dioxide sol, aluminum oxide sol, titanium oxide sol, zirconium oxide sol, tin oxide sol, beryllium oxide sol, antimony oxide sol, tungsten oxide sol and cerium oxide sol. The sol may be used solely or their mixture may be used.

The metal complex catalyst is exemplified by acetylacetone metal salt or ethylenediaminetetraacetic acid metal salt.

As the need arises, a surface active agent, a colorant and a solvent may be added so that the hard coating liquid is prepared.

It is preferred that the thickness of the hard coating layer be 1 µm or more, more preferably 2 µm to 3 µm.

Furthermore, on the hard coating layer, there may be formed an evaporated film of an inorganic compound having an anti-reflection ability by a known method.

The anti-reflection film may be a single or a multilayer structure film formed on the basis of the theory of optics. The anti-reflection film is usually formed by vacuum evaporation, sputtering, ion plating, or CVD. The material for forming the anti-reflection film may be an inorganic dielectric material selected from SiO, SiO₂, Al₂O₃, Y₂O₃, Yb₂O₃, CeO₂, ZrO₂, Ta₂O₃, TiO₂ and MgF₂.

As the need arises, a very thin film of an organic silicon compound or fluorine-contained hydrocarbon compound may be formed on the anti-reflection film in order to prevent anti-reflection film from contamination and water blush, each of the compounds comprising a side chain having a hydrophobic group, such as an alkyl group, a phenyl group or a polyfluoroalkyl group.

The primer composition is able to form a coating film exhibiting a long life (pot life), it can be hardened in heat treatment performed at relatively low temperatures and for a short time, and it exhibits excellent adhesive properties and smoothness.

Since the primer layer has both high degree of elasticity and excellent flexibility, it absorbs the energy of a certain impact on the plastics lens.

In the case where the primer layer is formed into the three-dimensional crosslinked structure, polyvinyl acetal and other substances are not dissolved in the hard coating liquid and therefore the hard coating liquid is not contaminated when the hard coating layer is formed by the wet method. It can be considered that the hydrogen combination between the appropriate hydroxyl group of polyvinyl acetal, that is the main element of the primer composition and the polar group of the surface of the plastic lens establishes the sufficient adhesive properties between the primer layer and the plastic lens. Furthermore, the reactions taken place between the appropriate hydroxyl group of polyvinyl acetal and the silanol group in the hard coating layer establish sufficient adhesive properties between the primer layer and the hard coating layer.

Since the primer composition contains dispersed particulate inorganic substances for adjusting the refractive index, the difference in the refractive index between the base of the plastics lens and the primer layer can be prevented. As a result, even if the primer composition is formed between the base of the plastics lens and the hard coating layer, generation of interference fringes can be prevented.

Even if the primer layers are formed on the surfaces of the base of the low-refractive plastics lens, impact resistance, mar-proof characteristic and heat resistance were improved considerably. The reason for this is that, since the thermal characteristic of the primer layer is substantially intermediate that of the base of the plastics lens and that of the hard coating layer, the thermal stress of the base of the plastics lens can be minimized.

The following Examples, in conjunction with the comparative Example, illustrate the invention.

The performance of the coated plastics lenses formed in the Examples, including the primer layer and further comprising both the hard coating layer and the anti-reflection layer was evaluated by the following methods.

### (A) Adhesive Properties of Film

To evaluate the adhesive properties between the base of the plastics lens and the primer layer, between the primer layer and the hard coating layer and between the hard coating layer and the anti-reflection film, the cross-cut tape adhesion method per JIS K-5400 was employed. A knife was used to form 100 squares each having a size of 1 mm on the surface of the coating layer; an adhesive cellophane tape ("Cellotape" trade name of Nichiban) was applied to the squares; and then the adhesive cellophane tape was rapidly peeled off vertically with respect to the surface. The foregoing operation was repeated 10 times.

Then, the number of the squares left on the surface of the coating layer was determined (X) to indicate the adhesive properties as X/100. If X was large, the sample had excellent adhesive properties. That is, the result of "100/100" of the cross hatching tape test indicates no separation of the film. The results of the evaluation are shown in the Table.

### (B) Mar-Proof Characteristic

The surface of the anti-reflection film of the coated plastics lens was rubbed 30 times with steel wool #0000 under a load of 600 g, the marks were evaluated in accordance with the following criteria. The results of the evaluation are shown in the Table.
A: the area having scars was 10 % or less;
B: the area having scars was 10 % to 30 % ; and
C: the area having scars was larger than 30 %.

### (C) Impact Resistance

In accordance with the impact resistance test per U.S. FDA standard, steel ball drop test was performed.

A steel ball, the weight of which was 20.0 g, was dropped from a position 127 cm high onto the central portion of the coated plastics lens. The number of impacts before that at which the plastics lens was broken or cracked, was noted as the impact resistance of the lens. The steel ball was not dropped more than five times. The results of the evaluation are shown in the Table.

### (D) Weathering Resistance

The weathering resistance of the coated plastics lens was evaluated using an ultraviolet-ray long life fade meter (manufactured by Suga) and the yellowing factor of the plastic. lens was measured. The evaluation was performed in accordance with the following criteria. The results of the evaluation are shown in the Table.
A: yellowing factor after a lapse of 300 hours was less than 2.0;
B: yellowing factor after a lapse of 300 hours was 2.0 to less than 2.5; and
C: yellowing factor after a lapse of 300 hours was 2.5 or more.

### (E) Chemical Resistance

The chemical resistance of the coated plastics lens was evaluated using hydrochloric acid solution the pH of which was 1, and sodium hydroxide solution the pH of which was 12; and the coated plastics lens was immersed in each of the solutions for 8 hours.

The evaluation was performed in accordance with the following criteria. The results of the evaluation are shown in the Table.
A: both acid and alkali did not affect the lens;
B: either acid or alkali affected the lens; and
C: both acid and alkali affected the lens.

### (F) External Appearance

The external appearance of the coated plastics lens was evaluated by visually observing its transparency with the light of a fluorescent lamp in a dark room. The evaluation was performed in accordance with the following criteria. The results of the evaluation are shown in the Table.
A: No cloudiness was observed;
B: Cloudiness was observed; and
C: Excessive cloudiness was observed.

### EXAMPLE 1

### (1-1) Preparation of Primer Composition

70 parts by weight of commercial polyvinylbutyral resin (manufactured by Wako) having a degree of butyralation of about 25 % and an average degree of polymerization of 2,400 were dissolved in 630 parts by weight of n-butanol, and 150 parts by weight of antimony pentoxide particles dispersed in a methanol solvent (Manufactured by Nissan Chemicals) were gradually added. Stirring was performed using a rotor and a magnetic stirrer. Then, 100 parts by weight of water, 8.5 parts by weight of methyltrimethoxysilane serving as a crosslinking agent, 1.2 parts by weight of p-toluenesulfonic acid serving as a catalytic hardener and 1 part by weight of FLUORAD FC430 (manufactured by Sumitomo 311) serving as a leveling agent were sequentially added; the mixture was sufficiently stirred to be made uniform; and the mixture was filtered through a membrane filter having a mesh size of 0.2 µm, so that a coating solution for a primer layer was prepared. The refractive index of the prepared primer composition was about 1.48.

### (1-2) Application and Hardening of Primer Composition

An NLIII (trade name of Nikon) eyeglass plastics lens, the refractive power of which was -4.25 diopter, the thickness of the central portion of which was 1.0 mm and the refractive index of which was 1.61 was initially subjected to a plasma process to improve the adhesive properties of the primer layer. The process was performed by using Plasma Reactor PR501A manufactured by Yamato under conditions that the pressure of oxygen gas was 0.2 Torr, the RF output was 200 W, and the period of the process was 30 seconds. On the concave surface of the high-refractive plastics lens, there was applied the coating solution for the primer layer prepared in (1-1) by a spin coating method. The spin coating conditions were such that spinning at a primary rotational frequency of 500 rpm was performed for 5 seconds, that at a secondary rotational frequency of 2,000 rpm was performed for 10 seconds, and the thickness of the primer layer was about 1 µm. Then, the high-refractive plastics lens, with the applied primer, was injected into a furnace so as to be heated at 90°C for 30 minutes so that the primer composition was hardened. The refractive index of the hardened primer layer was about 1.60.

### (1-3) Preparation of High-Refractive Hard Coating Liquid of Organosilane

180 parts by weight of γ-glycidoxypropyltrimethoxysilane were injected into a reactor chamber having a rotor, and then 40 parts by weight of 0.01 N hydrochloric acid solution were quickly added with vigorous stirring. Although non-uniform solution was prepared, the solution was made uniform and transparent with generating heat within several minutes. Then, the solution was stirred for one hour so as to be hydrolyzed, so that partially-condensed hydrolyzed substances were prepared.

To the foregoing hydrolyzed substances, 630 parts by weight of commercial tin oxide sol (of a methanol dispersion system having an average particle size of 10 nm to 15 nm), 4 parts by weight of ethylenediaminetetraacetate aluminum serving as a catalytic hardener and 0.45 parts by weight of FLUORAD FC430 (a silicon surface active agent and which served as a leveling agent) were sequentially added, followed by being sufficiently stirred and by being filtered by using a membrane filter, the mesh size of which was 3 µm, so that hard coating liquid was prepared. The refractive index of the hard coating liquid was about 1.49.

### (1-4) Application and Hardening of Hard Coating Liquid

To the two sides of the plastics lens having the primer layer obtained in (1-2), the organosilane hard coating liquid was applied by a dipping method (raising speed 100 mm/minute). The lens applied with it was subjected to heat treatment at 80°C for 4 hours so that the hard coating layer was hardened. The refractive index of the hardened hard coating layer was about 1.60.

### (1-5) Formation of Anti-Reflection Film

On the two sides of the plastic lens having the primer layer and the hard coating layer obtained in (1-4), there was formed a five-layered anti-reflection film made of silicon dioxide and zirconium oxide by a vacuum evaporation method.

### (1-6) Evaluation of coated Plastic Lens

The performance of the coated plastics lens comprising the obtained primer layer and further comprising both hard coating layer and the anti-reflection layer was evaluated by the procedures described above to determine its adhesive properties, mar-proof characteristics, impact resistance, weathering resistance, chemical resistance and external appearance.

Additionally, the heat resistance of the coated plastics lens was evaluated by determining the time at which cracks are generated in a hot environment. Specifically, the coated plastics lens was allowed to stand in a constant temperature oven for 10 minutes, and taken out into an environment of room temperature to check whether or not cracks had been generated, the thickness of the crack and change of the same as time passed. The evaluation was performed in accordance with the following criteria. A "fine crack" was a crack of a type that although existence of the crack was confirmed, it disappeared after it had allowed to stand for 15 minutes; a "medium crack" was a crack of a type that the crack did not disappear in allowing to stand for 15 minutes after its generation had been confirmed.
A: no crack was generated for 10 minutes in an environment of 100°C;
B: a fine crack was generated for 10 minutes in an environment of 100°C;
C: a medium crack was generated for 10 minutes in an environment of 100°C.

The results of all evaluations are shown in the Table.

### EXAMPLE 2

### (2-1) Preparation of Primer Composition

70 parts by weight of commercial polyvinylbutyral resin (manufactured by Wako) having a degree of butyralation of about 70 % and an average degree of polymerization of 700 were dissolved in 630 parts by weight of n-butanol, and 300 parts by weight of combined sol consisting of tin oxide particles and tungsten oxide particles and dispersed in a methanol solvent were gradually added. Stirring was performed using a rotor and a magnetic stirrer. Then, 100 parts by weight of water, 8.5 parts by weight of methyltrimethoxysilane serving as a crosslinking agent, 1.2 parts by weight of p-toluenesulfonic acid serving as a catalytic hardener and 1 part by weight of FLUORAD FC430 serving as a leveling agent were sequentially added; the mixture was sufficiently stirred to be made uniform; and the mixture was filtered through a membrane filter having a mesh size of 0.2 µm, so that a primer composition for coating was prepared. The refractive index of the prepared primer composition was about 1.46.

### (2-2) Application and Hardening of Primer Composition

An NLIII (trade name of Nikon) eyeglass plastics lens, the refractive power of which was -3.25 diopter, the thickness of the central portion of which was 1.0 mm and the refractive index of which was 1.61 was initially subjected to a plasma process to improve the adhesive properties of the primer layer, similarly to (1-1). On the concave surface of the high-refractive plastics lens, subjected to the foregoing process, there was applied the primer composition prepared in (2-1) by a spin coating method. The spin coating conditions were such that spinning at a primary rotational frequency of 500 rpm was performed for 5 seconds, that at a secondary rotational frequency of 2,000 rpm was performed for 10 seconds, and the thickness of the primer layer was about 1 µm. Then, the high-refractive plastics lens, with the applied primer, was injected into a furnace so as to be heated at 90°C for 30 minutes so that the primer composition was hardened. The refractive index of the hardened primer layer was about 1.59.

### (2-3) Preparation of High-Refractive Hard Coating Liquid of Organosilane

By employing a similar composition and a method to those of (1-3), high refractive hard coating liquid was prepared.

### (2-4) Application and Hardening of Hard Coating Liquid

By employing similar method and conditions to those in (1-4), hard coating liquid was applied and hardened.

### (2-5) Formation of Anti-Reflection Film

By employing similar method and conditions to those in (1-5), an anti-reflection film was formed.

### (2-6) Evaluation of Performance of coated Plastics Lens

The performance was evaluated similarly to (1-6). The results of the evaluation are shown in the Table.

### COMPARATIVE EXAMPLE

### (101-1) Preparation of Primer Composition

70 parts by weight of commercial polyvinylbutyral resin (manufactured by Wako) having a degree of butyralation of about 25 % and an average degree of polymerization of 700 were dissolved in 630 parts by weight of n-butanol with stirring sufficiently. Then, 100 parts by weight of water, 8.5 parts by weight of γ-glycidoxypropyl trimethoxysilane and 1 part by weight of glutaraldehyde serving as crosslinking agents, 1.2 parts by weight of p-toluenesulfonic acid serving as a catalytic hardener and 1 part by weight of FLUORAD FC430 serving as a leveling agent were sequentially added; the mixture was sufficiently stirred by using the rotor and the magnetic stirrer to be made uniform; and the mixture was filtered through a membrane filter having a mesh size of 0.2 µm, so that a primer composition for coating was prepared. The refractive index of the prepared primer composition was about 1.38.

### (101-2) Application and Hardening of Primer Liquid

A DXII (trade name of Nikon) eyeglass plastic lens, the refractive power of which was -4.00 diopter, the thickness of the central portion of which was 1.0 mm and the retractive index of which was 1.56 was initially subjected to a plasma process to improve the adhesive properties of the primer layer. The plasma process was performed under condition that the pressure of argon gas was about 0.2 Torr, the RF output was 200 W and the processing period was 30 seconds.

To improve adhesive properties of the primer with respect to the base, hexamethyldisilazane (a silane coupling agent) was formed on the base of the plastic lens. The film formation was performed in such a manner that the base of the plastics lens was allowed to stand for 3 minutes in an atmosphere of hexamethyldisilazane under a pressure about 1 Torr and temperature of 110°C.

On the concave surface of the medium-refractive plastics lens subjected to the surface treatment, there was applied the primer composition prepared in (101-1) by a spin coating method. The spin coating conditions were such that spinning at a primary rotational frequency of, 500 rpm was performed for 5 seconds, that at a secondary rotational frequency of 2,000 rpm was performed for 10 seconds, and the thickness of the primer layer was about 1.5 µm. Then, the medium-refractive plastics lens, with the applied primer composition, was injected into a furnace so as to be heated at 90°C for 30 minutes so that the primer composition was hardened.

The refractive index of the hardened primer layer was about 1.54.

### (101-3) Preparation of Medium-Refractive Hard Coating Liquid of Organosilane

180 parts by weight of γ-glycidoxypropyl trimethoxysilane were injected into a reactor chamber having a rotor, and 40 parts by weight of 0.01 N hydrochloric acid solution were quickly added with vigorous stirring. Although non-uniform solution was prepared, the solution was made to be uniform and transparent with generating heat within several minutes. Then, the solution was stirred for one hour so as to be hydrolyzed, so that partially-condensed hydrolyzed substances were prepared.

To the foregoing hydrolyzed substances, 630 parts by weight of commercial silica sol (of a methanol dispersion system having an average particle size of 10 nm to 20 nm and manufactured by Nissan Chemicals), 4 parts by weight of acetylacetone aluminum serving as a catalytic hardener and 0.45 parts by weight of FLUORAD FC430 were sequentially added, followed by being sufficiently stirred and by being filtered by using a membrane filter, the mesh size of which was 3 µm, so that hard coating liquid was prepared. The refractive index of the hard coating liquid was about 1.44.

### (101-4) Application and Hardening of Hard Coating Liquid

To the two sides of the plastics lens having the primer layer obtained in (101-2), organosilane hard coating liquid obtained in (101-3) was applied by a spin coating method (5 seconds at a primary rotational frequency of 500 rpm and 10 seconds at a secondary rotational frequency of 1,000 rpm) in such a manner that it was applied to one side, followed by being hardened, and then it was applied to the other side, followed by being hardened. The hardening condition was such that the temperature was 80°C and the heating period was 4 hours. The refractive index of the hardened hard coating layer was about 1.53.

### (101-5) Formation of Anti-Reflection Film

By employing similar method and conditions to those in (1-5), an anti-reflection film was formed.

### (101-6) Evaluation of Performance of coated Plastics Lens

The performance was evaluated similarly to (1-6). The results of the evaluation are shown in the Table

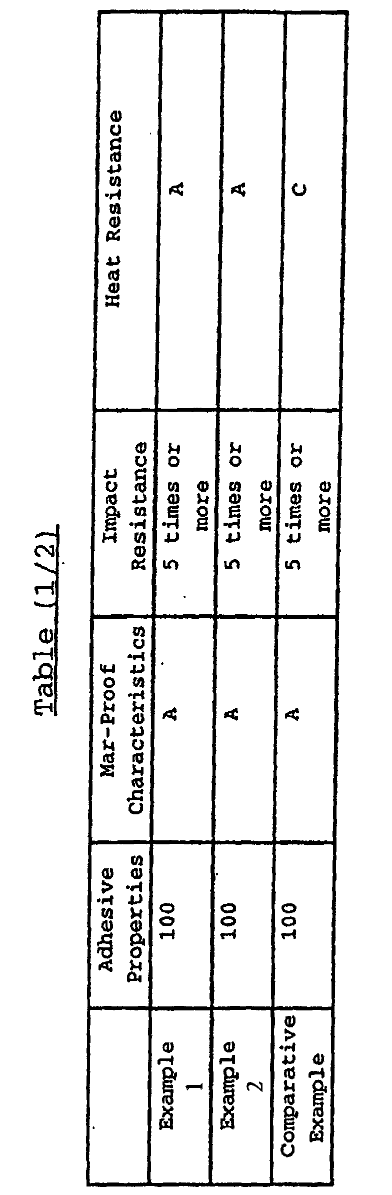

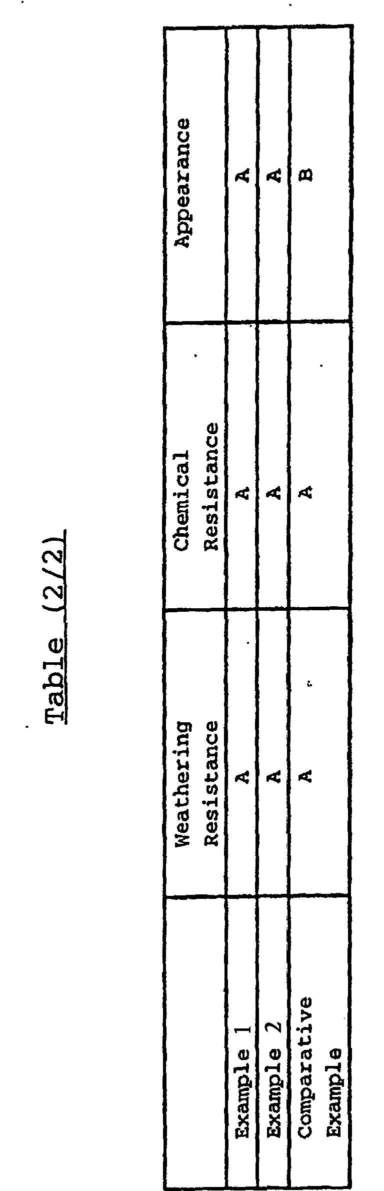

## Claims

1. A hard-coated plastics lens for eyeglasses having improved impact resistance, comprising:
a plastics lens;
a primer layer formed on at least one surface of the lens by coating on that surface a primer composition, and crosslinking and drying the composition, the primer composition comprising:
(A) from 1 to 30% by weight of a polyvinyl acetal of the general formula (I): 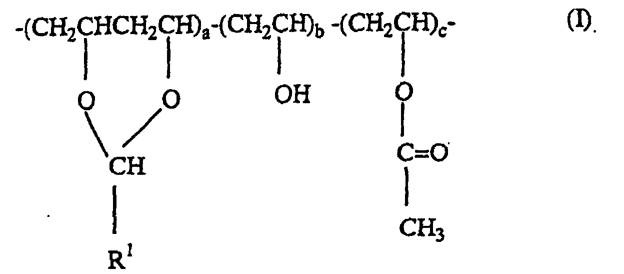 in which R¹ is a hydrogen atom or a saturated hydrocarbon group having 1 to 20 carbon atoms, a is the percentage fraction of structural units having an acetal group and is 10 to 90, b is the percentage fraction of structural units having an OH group and is 10 to 90, c is the percentage fraction of structural units having an acetyl group and is between 0 to 10, and a + b + c = 100;
(B) from 0.01 to 30% by weight of at least one crosslinking agent selected from:
hydrolyzable organosilanes, and their hydrolysis products, of the general formula (II):
R² _{d}R³ ₑ-Si-X¹ _{4-(d+e)} (II)
in which each of R² and R³ is a substituted or a non-substituted hydrocarbon group having 1 to 8 carbon atoms, X¹ is a hydrolyzable group, and each of d and e is 0, 1 or 2 and d + e = 1 or 2; and
hydrolyzable organosilanes, and their hydrolysis products, of the general formula (III):
X² _{(3-f)}R⁵ _{f}-Si-R⁴-Si-R⁶ _{g}X² _{(3-g)} (III)
in which R⁴ is an organic group having 2 to 8 carbon atoms, each of R⁵ and R⁶ is a substituted or a non-substituted hydrocarbon group having 1 to 8 carbon atoms, X² is a hydrolyzable group, and each off and g is 0, 1 or 2;
(C) from 10 to 80% by weight of a particulate inorganic substance having an average particle size of 1 to 300 nm and selected from aluminum oxide, iron oxide, cerium dioxide, tungsten oxide, molybdenum oxide, titanium oxide, zirconium oxide, tin oxide, antimony oxide, zinc oxide and beryllium oxide; and
(D) an organic solvent and water; and
a hard coating layer formed on the primer layer.

2. A plastics lens according to claim 1, further comprising a single-or multi-layer anti-reflection film formed on the hard coating layer and made of an inorganic substance.

3. A plastics lens according to claim 1 or claim 2, wherein the primer layer has a thickness of 0.05 µm to 5 µm.

## Patentansprüche

1. Hartbeschichtete Kunststofflinse für Brillen mit verbesserter Schlagfestigkeit, umfassend:
eine Kunststofflinse;
eine Haft- bzw.Grundiermittelschicht, die auf mindestens einer Oberfläche der Linse durch Auftragen einer Haft- bzw. Grundiermittelzusammensetzung auf diese Oberfläche und Vernetzen und Trocknen der Zusammensetzung gebildet wird, wobei die Haft- bzw. Grundiermittelzusammensetzung umfasst:
(A) 1 bis 30 Gew.-% eines Polyvinylacetals mit der allgemeinen Formel (l): 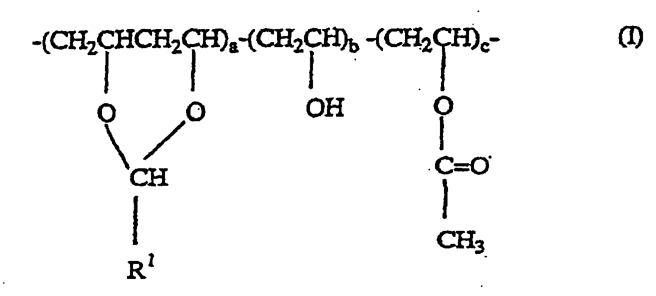 in welcher R¹ ein Wasserstoffatom oder eine gesättigte Kohlenwasserstoffgruppe mit 1 bis 20 Kohlenstoffatomen ist, a der prozentuale Anteil von Struktureinheiten mit einer Acetalgruppe ist und 10 bis 90 beträgt, b der prozentuale Anteil von Struktureinheiten mit einer OH-Gruppe ist und 10 bis 90 beträgt, c der prozentuale Anteil von Struktureinheiten mit einer Acetylgruppe ist und zwischen 0 bis 10 beträgt, und a + b + c = 100;
(B) 0,01 bis 30 Gew.-% mindestens eines Vernetzungsmittels ausgewählt aus:
hydrolysierbaren Organosilanen und ihren Hydrolyseprodukten, mit der allgemeinen Formel (II):
R² _{d}R³ ₑ-Si-X¹ _{4-(d+e)} (II)
in welcher R² und R³ jeweils eine substituierte oder eine nicht substituierte Kohlenwasserstoffgruppe mit 1 bis 8 Kohlenstoffatomen ist, X¹ eine hydrolysierbare Gruppe ist und d und e jeweils 0, 1 oder 2 sind und d + e = 1 oder 2; und
hydrolysierbaren Organosilanen, und ihren Hydrolyseprodukten, mit der allgemeinen Formel (III):
X² _{(3-f)}R⁵ _{f}-Si-R⁴-Si-R⁶ _{g}X² _{(3-g)} (III)
in welcher R⁴ eine organische Gruppe mit 2 bis 8 Kohlenstoffatomen ist, R⁵ und R⁶ jeweils eine substituierte oder eine nicht substituierte Kohlenwasserstoffgruppe mit 1 bis 8 Kohfenstoffatomen ist, X² eine hydrolysierbare Gruppe ist, und f und g jeweils 0, 1 oder 2 sind;
(C) 10 bis 80 Gew.-% einer partikulären anorganischen Substanz mit einer mittleren Teilchengröße von 1 bis 300 nm, ausgewählt aus Aluminiumoxid, Eisenoxid, Cerdioxid, Wolframoxid, Molybdänoxid, Titanoxid, Zirconiumoxid, Zinnoxid, Antimonoxid, Zinkoxid und Berylliumoxid; und
(D) ein organisches Lösungsmittel und Wasser; und
eine harte Überzugsschicht, die auf der Haft- bzw. Grundiermittelschicht gebildet wird.

2. Kunststofflinse nach Anspruch 1, außerdem umfassend einen einschichtigen oder mehrschichtigen Antireflexionsfilm, der auf der harten Überzugsschicht gebildet wird und aus einer anorganischen Substanz gefertigt wird.

3. Kunststofflinse nach Anspruch 1 oder Anspruch 2, worin die Haft- bzw. Grundiermittelschicht eine Dicke von 0,05 µm bis 5 µm aufweist.

## Revendications

1. Lentille en plastique enduite d'un revêtement dur pour des lunettes ayant une résistance améliorée aux chocs, comprenant :
une lentille en plastique ;
une couche de base formée sur au moins une surface de la lentille en enduisant cette surface d'une composition de base et en réticulant et séchant la composition, la composition de base comprenant :
(A) entre 1 et 30 % en poids d'un acétal de polyvinyle de formule générale (I) : 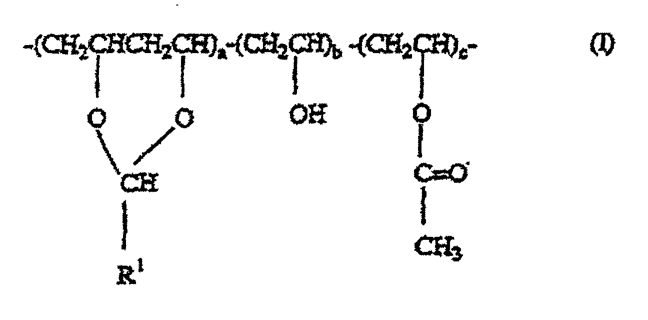 dans laquelle R¹ est un atome d'hydrogène ou un groupe hydrocarbure saturé ayant de 1 à 20 atomes de carbone, a est une fraction en pourcentage des unités structurales ayant un groupe acétal allant de 10 à 90, b est la fraction en pourcentage des unités structurales ayant un groupe OH allant de 10 à 90, c est la fraction en pourcentage des unités structurales ayant un groupe acétyle allant de 0 à 10 et a + b + c =100;
(B) entre 0,01 et 30 % en poids d'au moins un agent réticulant choisi parmi :
les organosilanes hydrolysables et leurs produits d'hydrolyse de formule générale (II) :
R² _{d}R³ ₑ-Si-X¹ _{4-(d+e)} (II)
dans laquelle R² et R³ sont chacun un groupe hydrocarbure substitué ou non substitué ayant de 1 à 8 atomes de carbone, X¹ est un groupe hydrolysable et d et e sont chacun égaux à 0, 1 ou 2 et d + e = 1 ou 2 ; et
les organosilanes hydrolysables et leurs produits d'hydrolyse de formule générale (III) :
X² _{(3-f)}R⁵ _{f}-Si-R⁴-Si-R⁶ _{g}X² _{(3-g)} (III)
dans laquelle R⁴ est un groupe organique ayant de 2 à 8 atomes de carbone, R⁵ et R⁶ sont chacun un groupe hydrocarbure substitué ou non substitué ayant de 1 à 8 atomes de carbone, X² est un groupe hydrolysable et f et g sont chacun 0, 1 ou 2 ;
(C) entre 10 et 80 % en poids d'une substance inorganique particulaire ayant une taille moyenne des particules allant de 1 à 300 nm et choisie parmi l'oxyde d'aluminium, l'oxyde de fer, le dioxyde de cérium, l'oxyde de tungstène, l'oxyde de molybdène, l'oxyde de titane, l'oxyde de zirconium, l'oxyde d'étain, l'oxyde d'antimoine, l'oxyde de zinc et l'oxyde de béryllium ; et
(D) un solvant organique et l'eau ; et
un revêtement dur formé sur la couche de base.

2. Lentille en plastique selon la revendication 1, comprenant en outre un film anti-réfléchissant monocouche ou multicouche formé sur la couche de revêtement dur et constitué en substance inorganique.

3. Lentille en plastique selon la revendication 1 ou 2, dans laquelle la couche de base possède une épaisseur de 0,05 µm à 5 µm.
